# EUROPÄISCHE PATENTSCHRIFT

(11) **EP 1 543 387 B1**
(45) Veröffentlichungstag und Bekanntmachung des Hinweises auf die Patenterteilung: **24.12.2008**
(21) Anmeldenummer: 03807792.1
(22) Anmeldetag: 14.08.2003
(51) Int. Cl.: G05B 11/01

(54) **REGELVORRICHTUNG UND VERFAHREN ZUM BETRIEB DER REGELVORRICHTUNG**
CONTROL SYSTEM AND METHOD FOR THE OPERATION THEREOF
DISPOSITIF DE REGULATION ET PROCEDE POUR FAIRE FONCTIONNER CE DERNIER

(30) Priorität: 25.09.2002 DE 10244905
(43) Veröffentlichungstag der Anmeldung: 22.06.2005
(73) Patentinhaber: austriamicrosystems AG, 8141 Unterpremstätten (AT)
(72) Erfinder: OBERHOFFNER, Gerhard, A-8010 Graz (AT); STEELE, Colin, Edingburgh EH9 2EG (GB); RIEDMÜLLER, Kurt, A-8141 Unterpremstätten (AT)
(74) Vertreter: Epping - Hermann - Fischer
(86) Internationale Anmeldenummer: PCT/EP2003/009042
(87) Internationale Veröffentlichungsnummer: WO 2004/034161

(56) Entgegenhaltungen:
- EP-A- 1 225 453
- DE-A- 2 541 062
- DE-A- 10 120 273
- DE-A- 19 539 519
- US-A1- 2001 050 552

## Beschreibung

Die Erfindung betrifft eine Regelvorrichtung mit einem Regelkreis, der ein Ausgangssignal erzeugt und einen auf einen Rückkoppeleingang des Regelkreises rückgekoppelten Rückführzweig enthält, mit einem Sensor, der in dem Regelkreis angeordnet ist und an seinem Ausgang ein Sensorsignal abgibt, das in ein Rückkoppelsignal umgesetzt und an den Rückkoppeleingang des Regelkreises zurückgeführt wird.

Die Erfindung betrifft weiter ein Verfahren zum Betrieb der Regelvorrichtung.

Derartige Regelkreise sind bekannt. Die DE 25 41 062 A1 beschreibt eine Regelvorrichtung, bei der der Soll-/Istwertvergleich zwischen dem Bezugssignal und dem rückgekoppelten Signal als Fehlersignal-generator bezeichnet ist, der Element des Regelkreises selbst ist. Das Fehlersignal dieses Fehlersignalgenerators ist kennzeichnend für die Abweichung eines Motors von einem bestimmten Drehzahlzustand. Parallel zu dem beschriebenen Regelkreis kann bei einer anderen Last auf eine zweite Regelcharakteristik umgeschaltet werden.

Die DE 101 20 273 A1 beschreibt eine Regelvorrichtung mit zwei überlagerten Regelkreisen für eine Xenönlampe und verwendet ebenfalls den Begriff Fehlersignalgenerator als Soll-/Istwertvergleicher, der jeweils Element des Regelkreises selbst ist. Die zwei überlagerten Regelkreise regeln einerseits den der Lampe zugeführten Strom und andererseits die Leistung.

Üblicherweise wird ein Eingangssignal des Regelkreises an einen Summierpunkt geführt, dessen Ausgang in die Regelstrecke führt, die das Ausgangssignal des Regelkreises abgibt. Das Ausgangssignal wird gemessen und mit negativem Vorzeichen auf den Rückkoppeleingang des Summierpunkts, d.h. den Eingang des Regelkreises rückgekoppelt. Auf dieser Weise ist es möglich, das Ausgangssignal des Regelkreises in Abhängigkeit von seinem Eingangssignal entsprechend den Anforderungen und Regelungscharakteristiken des Regelkreises zu regeln.

Die Messung des Ausgangssignals des Regelkreises erfolgt über einen Sensor, der entsprechend der physikalisch zu erfassenden Größe ausgewählt ist. Dieser Sensor kann entweder in der Regelstrecke selbst oder im Rückkoppelzweig angeordnet sein. Über das im Rückführzweig gebildete Rückkoppelsignal, das sich mit negativen Vorzeichen dem Eingangssignal überlagert, wird der Regelkreis geschlossen.

Sensoren für physikalische Größen, beispielsweise für magnetische oder elektrische Felder oder für mechanische oder chemische Größen weisen eine sensortypische Kennlinie des Ausgangssignals in Abhängigkeit von der zu messenden Eingangsgröße auf. Oftmals sind diese Kennlinien nur in einem kleinen Bereich, dem Arbeitsbereich des Sensors, linear und zeigen außerhalb dieses Bereiches eine nichtlineare Kennlinie zwischen der zu messenden Eingangsgröße und dem Ausgangssignal des Sensors. Dies führt zu Nichtlinearitäten, die in einem Regelkreis besonders berücksichtigt werden müssen und oft schwer auszuregeln sind.

In bestimmten Fällen verläuft die Kennlinie eines Sensors nichtlinear in der Weise, dass mit weiter steigender Messgröße die Empfindlichkeit, d.h. das Ausgangssignal des Sensors, nicht mehr weiter zunimmt, sondern dass die Empfindlichkeit nach Überschreiten eines Maximums bei weiter steigender Messgröße wieder abnimmt. Entsprechend umgekehrt ist das Verhalten der bzw. die Empfindlichkeit, wenn diese bei sinkender Messgröße nach Unterschreiten eines Minimums wieder zunimmt. Dieses Verhalten ist beispielsweise bei einem magnetoresistiven Sensor HNC 1001/1002 der Firma Honeywell der Fall. Dieser Sensor zeigt bei einem Magnetfeld der Stärke 0 Oe nahezu keine Ausgangsspannung. Im Bereich bis etwa 5 Oe besteht eine lineare Abhängigkeit zwischen Magnetfeld und Ausgangsspannung. Die Empfindlichkeit nimmt bei weiter steigendem Magnetfeld ab, d.h die Ausgangsspannung des Sensors steigt nicht mehr im gleichen Umfang. Bei etwa 11 Oe erreicht die Empfindlichkeitskurve ein Maximum. Bei höheren magnetischen Flußdichten nimmt die Ausgangsspannung des Sensors gegen 0 hin ab. Eine entsprechend spiegelbildliche Kurve ergibt sich bei negativen Flußdichten des Magnetfeldes.

In einer allgemeinen Regelvorrichtung und insbesondere bei Vorrichtungen mit magnetoresistiven Sensoren verschlechtern die durch die Empfindlichkeitskurve des Sensors verursachten Nichtlinearitäten die Eigenschaften des geschlossenen Regelkreises. In Überlastsituationen, in denen die Eingangsgröße stark ansteigt, kann es vorkommen, dass der Signalausgang des Sensors kein höheres Signal, sondern ein niedrigeres Signal ausgibt, als dem zu messenden Eingangssignal entspricht. Das bedeutet, dass in diesen extremen Betriebssituationen die negative Rückkoppelungsschleife den Regelkreis möglicherweise nicht mehr ausregeln kann. Ein derartiger als foldback bezeichneter Effekt ist in allen Anwendungen unerwünscht.

Der Erfindung liegt die Aufgabe zugrunde, eine Vorrichtung und ein Verfahren der eingangs genannten Art anzugeben, bei denen nichtlineare Veränderungen der Empfindlichkeit eines Sensors erkannt und ein sicheres Betriebsverhalten ermöglicht werden.

Diese Aufgabe löste die Erfindung mit den Merkmalen des Patentanspruchs 1 bzw. des Patentanspruchs 8.

Ausgestaltungen der Erfindung sind in Unteransprüchen gekennzeichnet.

Gemäß der Erfindung ist vorgesehen, eine Veränderung und insbesondere eine Verschlechterung der Empfindlichkeit des Sensors zu erkennen und/oder zu messen. Sobald eine derartige Veränderung der Empfindlichkeit festgestellt wird bzw. ein vorgegebenes Maß überschreitet, wird der Ausgang des Sensors auf einen vorgegebenen Wert gesetzt, der bevorzugt dem maximalen Meßwert entspricht. Dieser vorgegebene Wert wird bevorzugt geklemmt, d.h. festgehalten.

Auf diese Weise ist es möglich, den foldback-Effekt zu vermeiden. Weiterhin ist es möglich, den nicht regulären Betriebszustand des Regelkreises anzuzeigen oder kenntlich zu machen.

Sobald der Sensor wieder in einen Betriebszustand gelangt, der innerhalb des zulässigen Maßes der Empfindlichkeit liegt, kann die Klemmung auf den vorgegebenen Wert vorteilhaft aufgehoben werden und der Sensor kann wieder regulär arbeiten.

In der Regelvorrichtung gemäß der Erfindung ist ein Fehlersignalgenerator vorgesehen, der ein Fehlersignal erzeugt und in den Regelkreis einspeist, das sich dem Nutzsignal des Regelkreises überlagert. Dieses Nutzsignal ist beispielsweise das vor dem Einspeiseknoten für das Fehlersignal anliegende Signal der Regelstrecke. Weiter ist eine Detektiereinrichtung vorgesehen, die den Regelkreis überwacht und ein Maß für die Änderung der Empfindlichkeit beziehungsweise die Verschlechterung der Empfindlichkeit des Sensors festlegt. Die Detektiereinrichtung speist ausgangsseitig eine Steuereinrichtung des Regelkreises, die in Abhängigkeit von dem Ausgangssignal der Detektiereinrichtung das Ausgangssignal des Regelkreises auf den vorgegebenen Wert setzt bzw. klemmt.

Eine erfindungsgemäße Vorrichtung erlaubt die Nutzung der Verstärkung des geschlossenen Regelkreises unter Berücksichtugung des in dem Regelkreis angeordneten Sensors, ohne dass der Regelkreis z.B. für die Messung der Sensorempfindlichkeit aufgetrennt werden muss.

In einem regulären Betriebszustand wird das überlagerte Fehlersignal durch den Regelkreis kompensiert. Die Höhe des Fehlersignals und die Lage des Einspeise- bzw. Summierungspunktes, an dem das Fehlersignal in den Regelkreis eingespeist wird, wird dabei entsprechend den Entwurfsregeln des Regelkreises so gewählt, dass der geschlossene Rückkoppelungskreis das Fehlersignal am Ausgang der Regelvorrichtung auf einem gegenüber dem Nutz- Ausgangssignal des Regelkreises unerheblichen Signalwert minimiert.

Im Falle einer Verschlechterung der Empfindlichkeit des Sensors verändert sich die Kreisverstärkung des Regelkreises und der Fehler kann nicht mehr in gewohnter Weise kompensiert werden. Diese Veränderung kann detektiert werden, indem die Signale des Regelkreises am Einspeiseknoten für das Fehlersignal jeweils vor und nach der Einspeisung des Fehlersignals verglichen werden.

Im Fall, dass der Regelkreis mit seiner Funktion regulär im linearen Bereich arbeitet, wird der Ausgang des Einspeiseknotens für das Fehlersignal nicht dem Eingang dieses Einspeiseknotens entsprechen und im Fall einer verschlechterten Schleifenverstärkung wird der Ausgang des Einspeiseknotens für das Fehlersignal dem Eingang des Einspeiseknotens entsprechen. Entsprechend umgekehrt verhält sich der Vergleich, wenn der Signalvergleich nicht am Ausgang des Einspeiseknotens für das Fehlersignal, sondern an dessen Eingang erfolgt.

Um in der Lage zu sein, die Signale jeweils vor und hinter der Überlagerung des Fehlersignals zu vergleichen, wird das entsprechende Signal gemessen und gespeichert, bevor das Fehlersignal eingespeist und gemessen wird. Dazu weist die Detektiereinrichtung bevorzugt eine Speichereinrichtung und einen Komparator auf, der ein Signal der Regelstrecke mit einem in der Speichereinrichtung gespeicherten Signal vergleicht.

Bevorzugt ist der Komparator mit einer Entscheiderschaltung verbunden, die das Ausgangssignal der Detektiereinrichtung erzeugt, das mit der Steuereinrichtung verbunden ist.

In einer vorteilhaften Ausführungsform enthält die Steuereinrichtung eine Klemmschaltung, die das Ausgangssignal der Regelstrecke auf den vorgegebenen Wert festklemmt.

In einer weiteren vorteilhaften Ausgestaltung enthält die Detektiereinrichtung einen Signalpegelkomparator und/oder einen Signalvorzeichenkomparator, die eingangsseitig mit dem Regelkreis und ausgangsseitig mit der Entscheiderschaltung verbunden sind.

Der Ausgang der Entscheiderschaltung ist zum einen mit der Steuereinrichtung verbunden und andererseits mit dem Fehlersignalgenerator, dessen anderer Eingang mit einem Zeitsignalgenerator verbunden ist. Abhängig von den Signalen der Entscheiderschaltung wird deshalb zum einen die Steuereinrichtung auf den vorgegebenen Wert geklemmt und andererseits der Fehlersignalgenerator ein- oder ausgeschaltet.

Der Signalvorzeichenkomparator ist insbesondere in bipolaren Sensorsystemen vorgesehen, d.h. in Sensorsystemen, die Messgrößen mit positiven oder negativen Vorzeichen messen. Auf diese Weise wird ein Vorzeichen ermittelt, so dass das Fehlersignal mit der entsprechenden Polarität in den Regelkreis eingespeist werden kann. Allgemein ist hier zu sagen, dass das Fehlersignal, das typischerweise ein Rechtecksignal ist, mit umgekehrter Polarität gegenüber der Polarität des Ausgangssignals des Regelkreises eingespeist wird.

Der Signalpegelkomparator ist insbesondere dann vorteilhaft, wenn das Sensorsystem während der Überlastbedingungen des Regelkreises eine ausreichend hohe Schleifenverstärkung hat, um das Ausgangssignal des Regelkreises auf den vorgegebenen Wert zu klemmen. In diesem Fall kann der Ausgang der Detektiereinrichtung optional abgeschaltet werden. Der Signalpegelkomparator überwacht die Signalamplitode des Regelkreises um festzustellen, ob nach den Entwurfskriterien des Regelkreises die Schleifenverstärkung ausreichend hoch ist.

In einer besonders vorteilhaften Ausführungsform der Erfindung ist als Sensor ein magnetoresistiver Sensor vorgesehen, der zur Erfassung eines Magnetfeldes geeignet ist. Mit einem derartigen Sensor ist die Ausgestaltung des Regelkreises als Strommesssystem möglich.

Die Erfindung wird nachfolgend anhand von in den Figuren der Zeichnung dargestellten Ausführungsbeispielen näher erläutert. Es zeigen:
Figur 1 ein schematisches Schaltbild der Regelvorrichtung gemäß der Erfindung,
Figur 2a eine Regelvorrichtung mit einem magnetoresistiven Sensor zur Strommessung und
Figur 2b ein Schemaschaltbild der Regelvorrichtung gemäß Figur 2a.

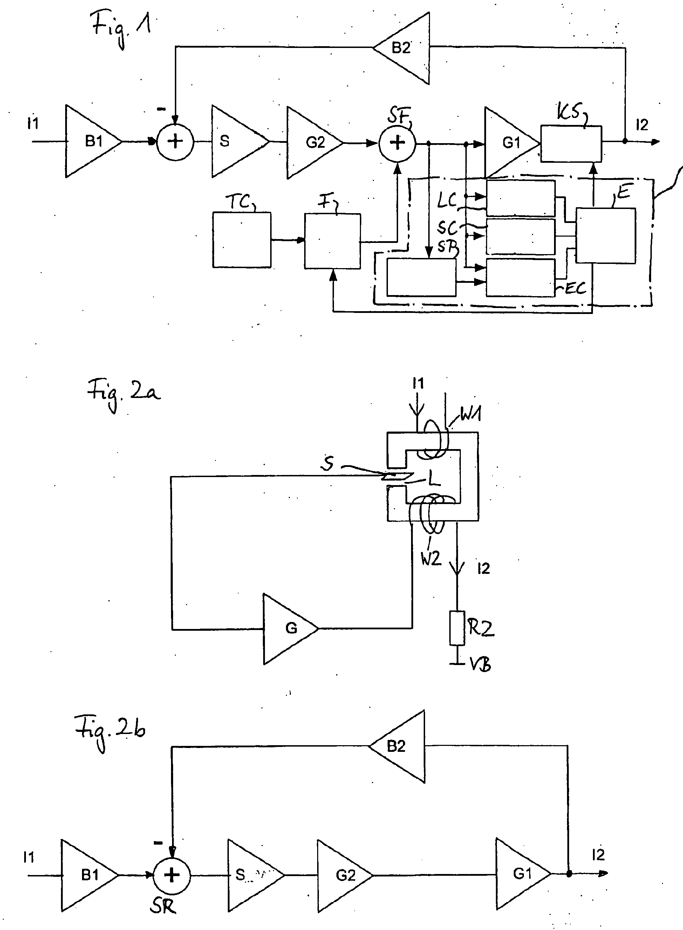

Figur 2 a zeigt eine Regelvorrichtung mit einem Strommesssensor, die aus drei Hauptkomponenten besteht. Die erste Komponente ist ein Stromtransformator, der einen Kern K mit einem Luftspalt L enthält. Auf den Kern ist eine Primärwicklung W1 aufgebracht, durch die ein Strom I1 fließt. Weiterhin ist auf den Kern K eine zweite Wicklung W2 aufgebracht, durch die auf der Sekundärseite der Strom I2 fließt. Die zweite Komponente der Regelvorrichtung ist der magnetische Sensor S, der in diesem Fall als magnetoresistiver Sensor ausgebildet ist und der im Luftspalt L des Kerns angeordnet ist. Die dritte Komponente der Regelvorrichtung ist ein negativer Rückkopplungszweig, der den Sensor S über einen Verstärker G mit der Sekundärwicklung W2 des Transformators verbindet. Ausgangsseitig ist die Sekundärwicklung W2 über einen Widerstand R2 mit einem Bezugspotential VB, zum Beispiel Masse verbunden.

Ein Eingangsstrom I1, der in die Primärwicklung W1 des Stromtransformators fließt, erzeugt in dem Luftspalt L einen magnetischen Fluß. Dieser magnetische Fluß wird durch den Sensor S erfaßt und mit Hilfe der negativen Rückkopplung des Regelkreises auf Null abgeglichen. Der Regelkreis stellt dabei den Strom I2 durch die Sekundärwicklung W2 so ein, dass der vom Strom I2 erzeugte magnetische Fluß entgegengesetzt gerichtet und betragsmäßig gleich groß ist wie der magnetische Fluß, der vom Strom I1 im Luftspalt erzeugt wird. Der Strom I2 durch die Sekundärwicklung ist das Maß für die Größe des Stroms I1 in der Primärwicklung.

Der Sensor S, im Ausführungsbeispiel ein magnetoresistiver Sensor, zeigt als parasitäre Eigenschaft eine abnehmende Empfindlichkeit, die bis gegen Null geht, wenn die magnetische Flußdichte in dem Luftspalt L ein sensorspezifisches maximales Feld überschreitet. Der Maximalwert der magnetischen Feldstärke ist eine Eigenschaft des Sensors, die sensorspezifisch variiert. Die beschriebene parasitäre Eigenschaft des Sensors verschlechtert die Eigenschaften des geschlossenen Regelkreises der Stromsensor-Regelvorrichtung.

In einem Überlast-Betriebszustand, in dem ein hoher Strom I1 in der Primärwicklung fließt, kann der Strom I2 in der Sekundärwicklung nicht weiter erhöht werden, weil der Ausgang des Stromsensors S bereits seinen Höchstwert erreicht hat. Es ist sogar möglich, dass der Ausgangswert des Stromsensors bei steigender Magnetfeldstärke wieder sinkt. Das bedeutet, dass der magnetische Fluß in dem Luftspalt L nicht mehr durch die negative Rückkoppelung mit der Hilfe des Sekundärstroms I2 kompensiert werden kann, so dass ein Wert für den Magnetfluß im Luftspalt L ungleich Null ist. Deshalb wird bei weiter ansteigendem Primärstrom I1 der Magnetfluß in dem Luftspalt des Stromtransformators schnell ansteigen, weil durch den Strom I2 keine Kompensation mehr möglich ist. Als Ergebnis wird der Magnetfluß in dem Luftspalt auf einen Wert ansteigen, der oberhalb des für die Messung zulässigen Maximalwerts des Sensors liegt. Dieser verliert seine Empfindlichkeit bzw. hat sie verloren. Bei einem magnetoresistiven Sensor, wie er in der eingangs beschriebenen Datenblattveröffentlichung der Firma Honeywell beschrieben ist, kann bei hohen Magnetflüssen ein foldback-Effekt auftreten, bei dem das Ausgangssignal des Sensors sogar geringer wird als bei niedrigeren Magnetfeldstärken. Ein derartiger foldback-Effekt bringt die Regelvorrichtung in einem unkontrollierbaren Zustand, der in jeder Anwendung unerwünscht ist.

Figur 2b zeigt ein schematisches Ersatzschaltbild der Regelvorrichtung gemäß Figur 2a. Der Strom I1 als zu messende Größe erzeugt den magnetischen Fluß B1, der als Eingangssignal des Regelkreises R einem Summierglied SR zugeführt wird. Ausgangsseitig wird als Ausgangssignal des Summiergliedes SR ein magnetischer Fluss vom Sensor S erfaßt und durch einen Verstärker mit den beiden Elementen G1 und G2 in den Sekundärstrom I2 des Regelkreises umgewandelt. Der Sekundärstrom I2 wiederum erzeugt mit Hilfe des Transformators den magnetischen Fluß B2, der mit negativem Vorzeichen auf den zweiten Eingang des Summiergliedes SR zurückgeführt wird. Das in Figur 2a als Verstärker gezeigte Element G ist in Figur 2b durch zwei Elemente G1 und G2 realisiert, um das Verständnis der Erfindung anhand von Figur 1 zu erleichtern.

Figur 1 zeigt eine erfindungsgemäße Regelvorrichtung am Ausführungsbeispiel des Strommessreglers, der anhand von Figur 2 bereits grundsätzlich beschrieben worden ist. Gleiche Elemente wie in Figur 2b sind in Figur 1 mit gleichen Bezugszeichen versehen. Im Unterschied zu Figur 2b ist in Figur 1 zwischen den beiden Verstärkerelementen G1 und G2 ein Summierglied SF angeordnet, das an einem Eingang mit dem Ausgang des Verstärkers G2 verbunden ist. Der andere Eingang ist mit einem Fehlersignalgenerator F verbunden, der ein Fehlersignal erzeugt und in das Summierglied SF einspeist. Das Fehlersignal des Fehlersignalgenerators F wird erzeugt, wenn der Ausgang des Fehlersignalgenerators F durch eine Entscheiderschaltung E und/oder einen Zeitsignalgenerator TC freigegeben ist. Das fehlersignal kann rechteckförmig sein. Der Ausgang des Summiergliedes SF wird einerseits dem Verstärker G1 zugeführt und andererseits einer Detektiereinrichtung D. Die Detektiereinrichtung D ist ausgangsseitig einerseits auf den Fehlersignalgenerator F und andererseits auf eine Steuereinrichtung KS rückgeführt, die als Klemmschaltung ausgebildet ist und im Ausgangskreis des Verstärkers G1 angeschlossen ist. Der Ausgang von KS bestimmt den Strom I2 der Sekundärwicklung des Transformators.

In einem normalen Betriebszustand, in dem kein Überlastbetrieb der Regelschaltung vorliegt, ist die Steuereinrichtung KS überbrückt, so dass der Ausgangsstrom I2 durch den Ausgangsstrom des Verstärkers G1 gebildet wird.

Im Überlastbetrieb wird die Steuereinrichtung KS durch die Detektiereinrichtung D so angesteuert, dass der Ausgangsstrom I2 auf einen vorgegebenen Wert festgelegt und geklemmt wird, der typischerweise dem maximalen Ausgangsstromwert der Regelvorrichtung entspricht. Dieser Wert ist höher als der im normalen Betriebszustand maximal zulässige Ausgangsstrom. In Verbindung mit einer Registrier- oder Anzeigeeinrichtung ist es somit möglich, einen regulären Betriebsszustand der Strommessvorrichtung festzustellen, weil der Ausgangsstrom I2 auf einen höheren als den im Meßbetrieb zulässigen Strom geklemmt wird.

Der Betriebszustand der Regelvorrichtung, d.h. die Empfindlichkeit des magnetoresistiven Sensors S, wird mit der Vorrichtung gemäß Figur 1 gemessen, indem ein Fehlersignal des Fehlersignalgenerators F dem Summierglied SF zugeführt wird und das Fehlersignal sich dem Meßsignal überlagert. Im Verhältnis zum Messsignal des Regelkreises ist das Fehlersignal erheblich kleiner.

Der Einspeisepunkt des Fehlersignals kann auch an einer anderen Stelle im Regelkreis vorgesehen sein. Wesentlich ist, dass das Fehlersignal in den geschlossenen Regelkreis eingespeist wird, so dass es in der Regelvorrichtung mit ausgeregelt wird. Dadurch wird es möglich, die volle Schleifenverstärkung des Regelkreises zu nutzen und das Fehlersignal in das Kennlinienverhalten des Sensors S einzubinden, um das überlagerte Fehlersignal mit Hilfe des Sekundärstroms I2 im Magnetfeld auszuregeln.

Die Größe des durch den Fehlersignalgenerator F erzeugten Fehlersignals wird so gewählt, dass der geschlossene Regelkreis das Fehlersignal auf einen nicht detektierbaren Signalpegel am Ausgang des Stromsensors minimiert.

Im Fall einer Verringerung der Empfindlichkeit des Senors S verringert sich die Schleifenverstärkung des Regelkreises und das Fehlersignal kann nicht mehr völlig kompensiert werden. Gegenüber dem regulären Zustand, dass das Fehlersignal vollständig kompensiert wird, kann dieser Zustand einer verringerten Empfindlichkeit des Senors detektiert werden, indem die Signale an dem Summierpunkt für das Fehlersignal SF jeweils verglichen werden, bevor und nachdem das Fehlersignal eingespeist wird. In dem Fall, dass der Regelkreis im normalen Betriebszustand arbeitet, wird der Ausgang des Summiergliedes SF dem Fehlersignal nicht folgen, weil das Fehlersignal durch den Regelkreis kompensiert wird. Im Fall einer verringerten Schleifenverstärkung wird das Fehlersignal am Ausgang des Summiergliedes SF jedoch messbar. Entsprechend umgekehrt sind die Verhältnisse, wenn der Vergleich am Eingang des Summiergliedes SF beziehungsweise am Ausgang des Verstärkers G2 durchgeführt wird.

Um nun das Signal am Ausgang des Summiergliedes SF jeweils vor und nach der Überlagerung des Fehlersignals vergleichen zu können, muß zumindest eines der Signale zwischengespeichert werden, damit ein Vergleich mit dem jeweils anderen Betriebszustand erfolgen kann. In der Detektiereinrichtung D besorgt die Zwischenspeicherung des Ausgangssignals von SF das Speicherelement SP, das ausgangsseitig einen Eingang des Fehlerkomparators EC belegt. Der andere Eingang des Fehlerkomparators EC ist mit dem Ausgang des Summiergliedes SF verbunden. Ausgangsseitig führt der Fehlerkomparator auf eine Entscheiderschaltung E die bei einem entsprechenden Eingangssignal ein Ausgangssignal erzeugt, um die Steuereinrichtung KS zum Klemmen des Ausgangsstromes I2 anszusteuern.

In einer Regelvorrichtung, in der ein Sensorsystem angeordnet ist, das beide Polaritäten zuläßt, also beispielsweise für entgegengesetzt gerichtete Magnetfeldstärken, enthält die Detektiereinrichtung D ein Vorzeichenspeicherelement SC, das eingangsseitig mit dem Ausgang des Summiergliedes SF und ausgangsseitig mit der Entscheiderlogik E verbunden ist. Das Vorzeichenspeicherelement SC speichert das Vorzeichen beziehungsweise die Polarität des anliegenden Signals, so dass in einem Überlastbereich der auf den Fehlersignalgenerator F rückgeführte Ausgang der Entscheiderlogik so eingestellt werden kann, dass die Polarität des am Knoten SF eingespeisten Fehlersignals umgekehrt als das Vorzeichen des Ausgangssignals des Regelkreises eingestellt wird.

Vorzugsweise ist als weiteres Element der Detektiereinrichtung D ein Signalpegelkomparator LC vorgesehen, der eingangsseitig ebenfalls mit dem Summierglied SF und ausgangsseitig mit der Entscheiderlogik E verbunden ist. Der Signalpegelgenerator LC stellt während Überlastbedingungen, bei denen die Regelvorrichtung des Sensorssystems noch eine ausreichend hohe Schleifenverstärkung hat, um den Ausgang des Regelkreises auf seinen maximalen Wert festzulegen, sicher, dass ein Teil der Detektiereinrichtung D optional abgeschaltet werden kann. Die Entscheiderlogik braucht in diesem Fall kein Signal zu erzeugen, dass die Klemmschaltung KS aktiviert.

Wie anhand von Figur 1 geschildert, ist es besonders vorteilhaft, dass Fehlersignal des Fehlersignalgenerators F intermittierend in den Knoten SF einzuspeisen. Dies kann mit einer Frequenz im kHz-Bereich geschehen, so dass der Messvorgang der Detektiereinrichtung D im Bereich von wenigen Mikrosekunden liegt. Vorteil der Erfindung ist, dass in einem Überlastbereich immmer eine klare Erkennung dieses Bereiches möglich ist und dass dazu der geschlossene Regelkreis nicht geöffnet zu werden braucht.

Wenn nach Beendigung des Überlastbereiches der Strom I1 durch die Primärwicklung des Transformators wieder auf einen Wert sinkt, der einen regulären Sensorbetrieb beziehungsweise einen regulären Betrieb der Regelvorrichtung ermöglicht, wird dies mit Hilfe der Detektiereinrichtung D festgestellt und die Steuereinrichtung KS wieder überbrückt bzw. die Klemmschaltung abgeschaltet.

Es ist zu betonen, dass es sich bei der erfindungsgemäßen Regelanordnung um eine universelle Vorrichtung beziehungsweise um ein universelles Verfahren handelt. Die Erfindung kann in jeder Regelvorrichtung eingesetzt werden, in der ein Sensor mit parasitären Eigenschaften in den Regelkreis eingebunden ist. Bei einem geschlossenen Regelkreis wird die Schleifenverstärkung des Systems benutzt, um die Empfindlichkeit beziehungsweise Genauigkeit des Sensorsausgangs zu kontrollieren. Alle parasitären Fehler des Regelkreises wie Verstärkungsänderungen, Offset, Rauschen oder überlagerte Fehlersignale werden durch die Schleifenverstärkung mit negativer Rückkoppelung abgeschwächt. Im Fall einer Verschlechterung der Eigenschaften eines Elementes in dem geschlossenen Regelkreis wird das überlagerte Fehlersignal nicht mehr kompensiert und kann deshalb benutzt werden um die Verschlechterung der Eigenschaften der Regelvorrichtung zu detektieren und den Ausgang der Regelvorrichtung entsprechend einzustellen.

## Patentansprüche

1. Regelvorrichtung mit einem Regelkreis, der ein Ausgangssignal (I2) erzeugt und einen auf einen Rückkoppeleingang (-) des Regelkreises rückgekoppelten Rückführzweig enthält, mit einem Sensor (S), der in dem Regelkreis angeordnet ist und an seinem Ausgang ein Sensorsignal abgibt, das in ein Rückkoppelsignal umgesetzt und an den Rückkoppeleingang des Regelkreises zurückgeführt wird,
**gekennzeichnet durch**
- einen Fehlersignalgenerator (F) außerhalb des Regelkreises, der ein vorgegebenes Fehlersignal erzeugt und so in den Regelkreis einspeist, dass es sich einem Nutzsignal des Regelkreises überlagert,
- eine Detektiereinrichtung (D), die die Signale des Regelkreises vor und hinter der Überlagerung des vorgegebenen Fehlersignals vergleicht, und
- eine Steuereinrichtung (KS) in dem Regelkreis, die abhängig vom Ausgangssignal der Detektiereinrichtung das Ausgangssignal (I2) des Regelkreises auf einen vorgegebenen Wert setzt.

2. Regelvorrichtung nach Anspruch 1,
**dadurch gekennzeichnet, dass**
die Detektiereinrichtung (D) eine Speichereinrichtung (SP) und einen Komparator (EC) enthält, der das Messsignal des Regelkreises mit einem in der Speichereinrichtung (SP) gespeicherten Signal vergleicht.

3. Regelvorrichtung nach Anspruch 2,
**dadurch gekennzeichnet, dass**
der Komparator (EC) mit einer Entscheiderlogik (E) verbunden ist, die die Steuereinrichtung (KS) ansteuert.

4. Regelvorrichtung nach Anspruch 1 bis 3,
**dadurch gekennzeichnet, dass**
die Steuereinrichtung (KS) eine Klemmschaltung enthält, die das Ausgangssignal (I2) des Regelkreises auf den vorgegebenen Wert festsetzt.

5. Regelvorrichtung nach Anspruch 3,
**dadurch gekennzeichnet, dass**
die Detektiereinrichtung (D) einen Signalpegelkomparator (LC) und/oder einen Signalvorzeichenkomperator (SC) enthält, die eingangsseitig mit dem Regelkreis und ausgangsseitig mit der Entscheiderlogik (E) verbunden sind.

6. Regelvorrichtung nach einem der Ansprüche 3 bis 5,
**dadurch gekennzeichnet, dass**
der Fehlersignalgenerator (F) mit einem Zeitsignalgenerator (TC) und/oder der Detektiereinrichtung (D) verbunden ist und abhängig von deren Ausgangssignal das Fehlersignal erzeugt.

7. Regelvorrichtung nach einem der Ansprüche 1 bis 5,
**dadurch gekennzeichnet, dass**
ein magnetoresistiver Sensor (S) zur Erfassung eines Magnetfeldes vorgesehen ist.

8. Verfahren zum Betreiben einer Regelvorrichtung nach einem der Ansprüche 1 bis 7, bei dem ein in einem Regelkreis angeordneter Sensor (S) ein Sensorsignal abgibt, das in ein Rückkoppelsignal umgesetzt und an einen Rückkoppeleingang des Regelkreises zurückgeführt wird,
**gekennzeichnet durch** folgende Schritte:
- ein vorgegebenes Fehlersignal eines Fehlersignalgenerators (F) außerhalb des Regelkreises wird in den Regelkreis so eingespeist, dass sich das Fehlersignal einem Nutzsignal des Regelkreises überlagert,
- eine Detektiereinrichtung (D) überwacht die Signale des Regelkreises vor und hinter der Überlagerung des vorgegebenen Fehlersignals und vergleicht das überwachte Signal mit einem zuvor gespeicherten Signal,
- bei Erfüllung eines vorgegebenen Kriteriums erzeugt die Detektiereinrichtung ein Ausgangssignal, das
- eine Steuereinrichtung (KS) in dem Regelkreis ansteuert, die wiederum das Ausgangssignal (I2) des Regelkreises auf einen vorgegebenen Wert setzt.

9. Verfahren nach Anspruch 8,
**dadurch gekennzeichnet, dass**
das Messsignal des Regelkreises in einer Speichereinrichtung (SP) gespeichert und ein zweites Messsignal mit dem gespeicherten Messignal in einem Komparator (EC) verglichen wird.

10. Verfahren nach Anspruch 9,
**dadurch gekennzeichnet, dass**
ein Ausgangssignal des Komparators (EC) eine Entscheiderlogik (E) ansteuert und diese eine Steuereinrichtung (KS), die bei Erfüllung eines vorgegebenen Kriteriums ein Ausgangssignal des Regelkreises auf einen Wert festsetzt.

11. Verfahren nach einem der Ansprüche 8 bis 10,
**dadurch gekennzeichnet, dass**
ein Signalpegelkomparator (LC) und/oder ein Signalvorzeichenkomparator (SC) der Detektiereinrichtung (D) das Messsignal des Regelkreises erfassen und ausgangsseitig ein Signal an die Entscheiderlogik (E) abgeben.

12. Verfahren nach einem der Ansprüche 8 bis 11,
**dadurch gekennzeichnet, dass**
der Fehlersignalgenerator (F) von einem Zeitsignalgenerator (TC) und/oder der Detektiereinrichtung (D) angesteuert ist und abhängig von deren Ausgangssignalen das Fehlersignal erzeugt.

## Claims

1. Control apparatus having a control loop which generates an output signal (I2) and contains a feedback path which is fed back to a feedback input (-) of the control loop, and having a sensor (S) which is arranged in the control loop and emits, at its output, a sensor signal which is converted into a feedback signal and is fed back to the feedback input of the control loop,
**characterized by**
- an error signal generator (F), outside the control loop, which generates a predefined error signal and feeds it into the control loop in such a manner that it is superimposed on a useful signal of the control loop,
- a detection device (D) which compares the signals from the control loop before and after the superimposition of the predefined error signal, and
- a control device (KS), in the control loop, which sets the output signal (I2) from the control loop to a predefined value on the basis of the output signal from the detection device.

2. Control apparatus according to Claim 1,
**characterized in that**
the detection device (D) contains a memory device (SP) and a comparator (EC) which compares the measurement signal from the control loop with a signal stored in the memory device (SP).

3. Control apparatus according to Claim 2,
**characterized in that**
the comparator (EC) is connected to a decision logic unit (E) which drives the control device (KS).

4. Control apparatus according to Claims 1 to 3,
**characterized in that**
the control device (KS) contains a clamping circuit which sets the output signal (I2) from the control loop to the predefined value.

5. Control apparatus according to Claim 3,
**characterized in that**
the detection device (D) contains a signal level comparator (LC) and/or a signal sign comparator (SC) which is/are connected to the control loop on the input side and to the decision logic unit (E) on the output side.

6. Control apparatus according to one of Claims 3 to 5,
**characterized in that**
the error signal generator (F) is connected to a time signal generator (TC) and/or to the detection device (D) and generates the error signal on the basis of the output signal therefrom.

7. Control apparatus according to one of Claims 1 to 5,
**characterized in that**
a magnetoresistive sensor (S) is provided for the purpose of detecting a magnetic field.

8. Method for operating a control apparatus according to one of Claims 1 to 7, in which a sensor (S) which is arranged in a control loop emits a sensor signal which is converted into a feedback signal and is fed back to a feedback input of the control loop,
**characterized by** the following steps:
- a predefined error signal from an error signal generator (F) outside the control loop is fed into the control loop in such a manner that the error signal is superimposed on a useful signal of the control loop,
- a detection device (D) monitors the signals from the control loop before and after the superimposition of the predefined error signal and compares the monitored signal with a previously stored signal,
- when a predefined criterion is satisfied, the detection device generates an output signal which
- drives a control device (KS) in the control loop, which control device in turn sets the output signal (I2) from the control loop to a predefined value.

9. Method according to Claim 8,
**characterized in that**
the measurement signal from the control loop is stored in a memory device (SP) and a second measurement signal is compared with the stored measurement signal in a comparator (EC).

10. Method according to Claim 9,
**characterized in that**
an output signal from the comparator (EC) drives a decision logic unit (E) and the latter drives a control device (KS) which sets an output signal from the control loop to a value when a predefined criterion is satisfied.

11. Method according to one of Claims 8 to 10,
**characterized in that**
a signal level comparator (LC) and/or a signal sign comparator (SC) of the detection device (D) detect(s) the measurement signal from the control loop and emit(s) a signal to the decision logic unit (E) on the output side.

12. Method according to one of Claims 8 to 11,
**characterized in that**
the error signal generator (F) is driven by a time signal generator (TC) and/or the detection device (D) and generates the error signal on the basis of the output signals therefrom.

## Revendications

1. Dispositif de régulation comportant un circuit de régulation qui génère un signal de sortie (I2) et comprend un chemin de retour couplé rétroactivement avec une entrée de retour (-) du circuit de régulation, avec un capteur (S) arrangé dans le circuit de régulation et émettant un signal de capteur à sa sortie, qui est converti en un signal de retour et est renvoyé à l'entrée de retour du circuit de régulation,
**caractérisé par**
- un générateur de signal d'erreur (F) externe au circuit de régulation, qui génère un signal d'erreur prédéterminé et l'alimente dans le circuit de régulation de telle façon que ce signal d'erreur se superpose à un signal utile du circuit de régulation,
- un dispositif de détection (D) qui compare les signaux du circuit de régulation avant et après la superposition du signal d'erreur prédéterminé, et
- un dispositif de commande (KS) dans le circuit de régulation, qui pose le signal de sortie (I2) du circuit de régulation egal à une valeur prédéterminée en fonction du signal de sortie du dispositif de détection.

2. Dispositif de régulation suivant la revendication 1,
**caractérisé en ce que**
le dispositif de détection (D) comporte un dispositif de stockage (SP) et un comparateur (EC) qui compare le signal de mesure du circuit de régulation avec un signal stocké dans le dispositif de stockage (SP).

3. Dispositif de régulation suivant la revendication 2,
**caractérisé en ce que**
le comparateur (EC) est connecté par un logique de décision (E), qui commande le circuit de commande (KS).

4. Dispositif de régulation suivant l'une des revendications 1 à 3,
**caractérisé en ce que**
le dispositif de commande (KS) comporte un circuit de blocage, qui pose le signal de sortie (I2) du circuit de régulation egal à la valeur prédéterminée.

5. Dispositif de régulation suivant la revendication 3,
**caractérisé en ce que**
le dispositif de détection (D) comporte un comparateur de niveau de signal (LC) et/ou un comparateur de préfixe de signal (SC), qui est/sont connecté(s) avec le circuit de régulation à l'entrée et avec le logique de décision (E) à la sortie.

6. Dispositif de régulation suivant l'une des revendications 3 à 5,
**caractérisé en ce que**
le générateur de signal d'erreur (F) est connecté avec un générateur de signal temporel (TC) et/ou avec le dispositif de détection (D) et génère le signal d'erreur en fonction de leur signal de sortie.

7. Dispositif de régulation suivant l'une des revendications 1 à 5,
**caractérisé en ce que**
un capteur magnétorésistif (S) est pourvu pour la détection d'un champ magnétique.

8. Procédé de fonctionnement d'un dispositif de régulation suivant l'une des revendications 1 à 7, dans lequel un capteur (S) arrangé dans un circuit de régulation génère un signal de capteur, qui est converti en un signal de retour et est renvoyé à une entrée de retour du circuit de régulation,
**caractérisé par** les étapes suivantes :
- un signal d'erreur prédéterminé d'un générateur de signal d'erreur (F) externe au circuit de régulation est alimenté dans le circuit de régulation, de telle façon que le signal d'erreur se superpose à un signal utile du circuit de régulation,
- un dispositif de détection (D) surveille les signaux du circuit de régulation avant et après la superposition du signal d'erreur prédéterminé et compare le signal surveillé avec un signal stocké préalablement,
- lorsqu'un critère prédéterminé est rempli, le dispositif de détection génère un signal de sortie
- commandant un dispositif de commande (KS) arrangé dans le circuit de régulation, qui pose à son tour le signal de sortie (I2) du circuit de régulation egal à une valeur prédéterminée.

9. Procédé suivant la revendication 8,
**caractérisé en ce que**
le signal de mesure du circuit de régulation est enregistré dans un dispositif de stockage (SP) et un deuxième signal de mesure est comparé par un comparateur (EC) avec le signal de mesure enregistré.

10. Procédé suivant la revendication 9,
**caractérisé en ce que**
un signal de sortie du comparateur (EC) commande un logique de décision (E) et celui-ci commande un circuit de commande (KS), qui pose un signal de sortie du circuit de régulation egal à une valeur lorsqu'un critère prédéterminé est rempli.

11. Procédé suivant l'une des revendications 8 à 10,
**caractérisé en ce que**
un comparateur de niveau de signal (LC) et/ou un comparateur de préfixe de signal (SC) du dispositif de détection (D) détecte(nt) le signal de mesure du circuit de régulation et émet(tent) à la sortie un signal au logique de décision (E).

12. Procédé suivant l'une des revendications 8 à 11,
**caractérisé en ce que**
le générateur de signal d'erreur (F) est commandé par un générateur de signal temporel (TC) et/ou par le dispositif de détection (D) et génère le signal d'erreur en fonction de leur signal de sortie.
